# EUROPEAN PATENT SPECIFICATION

(11) **EP 3 582 289 B1**
(45) Date of publication and mention of the grant of the patent: **15.06.2022**
(21) Application number: 19176979.3
(22) Date of filing: 28.05.2019
(51) Int. Cl.: H01M 50/20, H01M 10/625, H01M 10/615, H01M 10/613, H01M 10/6554

(54) **BATTERY PACK AND ELECTRIC AUTOMOBILE**
BATTERIEPACK UND ELEKTRISCHES FAHRZEUG
BLOC-BATTERIEET VOITURE ELECTRIQUE

(30) Priority: 14.06.2018 CN 201810614053
(43) Date of publication of application: 18.12.2019
(73) Proprietor: Contemporary Amperex Technology Co., Limited, Jiaocheng District Ningde City, Fujian 352100 (CN)
(72) Inventor: CHEN, Xingdi, Ningde, Fujian 352100 (CN); WANG, Peng, Ningde, Fujian 352100 (CN); ZHOU, Linggang, Ningde, Fujian 352100 (CN)
(74) Representative: Manitz Finsterwald Patent- und Rechtsanwaltspartnerschaft mbB

(56) References cited:
- WO-A1-2018/112619
- CN-A- 106 025 132
- CN-U- 206 878 068
- US-A1- 2016 141 735
- US-A1- 2017 047 623
- US-B1- 9 533 600

## Description

### FIELD OF THE PRESENT INVENTION

The present invention relates to the field of battery, and particularly relates to a battery pack and electric automobile. The features of the preamble of the independent claim are known from CN 106 025 132 A and US 9 533 600 B1. Related technologies are known from US 2017/047623 A1, CN 206 878 068 U and US 2016/141735 A1.

### BACKGROUND OF THE PRESENT INVENTION

In a battery pack, the normal ideal operating temperature of the battery is 20°C~35°C, and in order to ensure the normal service life of the battery in extremely cold environment or in extremely hot environment, thermal management is necessarily designed for the battery pack and adjusts the operating temperature of the battery by heating or cooling.

In order to adjust the operating temperature of the battery during the working of the battery pack, general methods of the existing battery pack are: (1) providing a heat exchanging plate inside a box of the battery pack; (2) providing a heat exchanging plate outside the box of the battery pack.

For the method of providing the heat exchanging plate inside the box, the existing structure of the battery pack needs to be redesigned, and because the interior space of the box is relatively limited, which causes great difficulty on the design. Meanwhile, if the heat exchanging liquid in the heat exchanging plate of the battery pack leaks out in the process of long-term service, on one hand, the heat exchanging liquid will makes the outer case of the battery be electrically conducted with the metal component of the box, thereby lowering the insulation resistance value of the entire box, on the other hand, the heat exchanging liquid also can accelerate the corrosion process of the metal component of the box, thereby generating safety hazard.

For the method of providing the heat exchanging plate outside the box, although it resolves the problems of the space utilization of the box and the effect of leakage of the heat exchanging liquid in the interior of the box of the battery pack, when the battery pack is used in an electric automobile, the heat exchanging plate of the battery pack will directly contact a mounting plate of the electric automobile. Because the temperature of the mounting plate is close to the temperature of the external environment of the electric automobile, when the electric automobile is in extremely cold environment or extremely hot environment, the mounting plate will exchange heat with the heat exchanging plate, thereby lowering the cooling or heating efficiency of the heat exchanging plate with respect to the battery inside the box.

### SUMMARY OF THE PRESENT INVENTION

In view of the problem existing in the background, an object of the present invention is to provide a battery pack and electric automobile, a bracket assembly of the battery pack interposes between the heat exchanging plate and the mounting plate of the electric automobile, which reduces the effect of the temperature of the mounting plate on the heat exchanging plate, thereby improving the cooling or heating efficiency of the heat exchanging plate. The present invention is defined in the independent claim.

In order to achieve the above object, the present invention provides a battery pack, which is used for an electric automobile and comprises: a box; a heat exchanging plate positioned below the box in a height direction; and a bracket assembly positioned below the heat exchanging plate in the height direction and fixedly connected with the box, and the bracket assembly is used to directly contact a mounting plate of the electric automobile.

The bracket assembly comprises: at least two longitudinal beams spaced apart from each other in a width direction; and at least two transversal beams spaced apart from each other in a length direction, and two transversal beam end portions of the transversal beam in the width direction each are fixedly connected with one corresponding longitudinal beam.

The heat exchanging plate comprises: a main body portion; and a plurality of first mounting portions, each first mounting portion is formed to protrude from the main body portion. The longitudinal beam comprises: a plurality of second mounting portions formed on one side of the longitudinal beam facing the heat exchanging plate, each second mounting portion is cooperated with and fixedly connected with one corresponding first mounting portion of the heat exchanging plate.

The heat exchanging plate further comprises: a plurality of first fitting portions formed on one side of the heat exchanging plate facing the bracket assembly and spaced apart from each other in the width direction. The transversal beam further comprises: a plurality of second fitting portions formed on one side of the transversal beam facing the heat exchanging plate and spaced apart from each other in the width direction, and each second fitting portion is fitted with one corresponding first fitting portion by concave-convex fit.

The first fitting portion of the heat exchanging plate is formed in a U-shaped structure. The plurality of second fitting portions of the transversal beam are formed as a saw-toothed structure.

The longitudinal beam further comprises: a plurality of third mounting portions formed on one side of the longitudinal beam facing the heat exchanging plate and spaced apart from each other in the length direction, and each third mounting portion is fixedly connected with one transversal beam end portion of the corresponding transversal beam.

The bracket assembly further comprises: a protecting beam fixedly connected with the longitudinal beam end portion of the longitudinal beam in the length direction, and the protecting beam is used for protecting the heat exchanging plate in the length direction.

The longitudinal beam further comprises: a fourth mounting portion formed on one side of the longitudinal beam end portion facing the heat exchanging plate and fixedly connected with the protecting beam.

The protecting beam comprises: a flat plate portion arranged side by side with the at least two transversal beam; and a side plate portion protruding from the flat plate portion in the height direction and positioned at one side of the heat exchanging plate in the length direction to protect the heat exchanging plate in the length direction.

The longitudinal beam further comprises: a supporting portion formed on one side of the longitudinal beam in the width direction and extending in the width direction; and an installing portion formed on the other side of the longitudinal beam in the width direction and extending in the width direction.

The present invention further provides an electric automobile, which comprises the battery pack described above.

The present invention has the following beneficial effects: because the bracket assembly of the battery pack interposes between the heat exchanging plate and the mounting plate, the heat exchanging plate does not need to be directly exchanged heat with the mounting plate, thereby lowering the effect of temperature of the mounting plate on the heat exchanging plate, and improving the cooling or heating efficiency of the battery inside the box by the heat exchanging plate.

### BRIEF DESCRIPTION OF THE DRAWINGS

FIG. 1 is a perspective view of a battery pack according to the present invention.
FIG. 2 is an exploded view of FIG. 1.
FIG. 3 is an assembled view of a heat exchanging plate, a bracket assembly and a heat conduction pad according to the present invention.
FIG. 4 is an exploded view of FIG. 3, with the heat exchanging plate of FIG. 3 viewed from the front.
FIG. 5 is a perspective view of the heat exchanging plate of FIG. 4 as viewed from behind.
FIG. 6 is a perspective view of a longitudinal beam of the bracket assembly of FIG. 4 as viewed from the front.
FIG. 7 a perspective view of the longitudinal beam of the bracket assembly of FIG. 4 as viewed from behind.
FIG. 8 is a perspective view of a transversal beam of the bracket assembly of FIG. 4 as viewed from the front.
FIG. 9 is a perspective view of the transversal beam of the bracket assembly of FIG. 4 as viewed from behind.
FIG. 10 is a perspective view of a protecting beam of the bracket assembly of FIG. 4.

Reference numerals in figures are represented as follows:
1 box
   11 seventh mounting hole
2 heat exchanging plate
   21 main body portion
   22 first mounting portion
      221 first mounting hole
   23 first fitting portion
   24 extending portion
3 bracket assembly
   31 longitudinal beam
      311 longitudinal beam end portion
      312 second mounting portion
         3121 second mounting hole
      313 third mounting portion
         3131 third mounting hole
      314 fourth mounting portion
         3141 fourth mounting hole
      315 supporting portion
      316 installing portion
         3161 connecting hole
      317 fixing hole
   32 transversal beam
      321 transversal beam end portion
         3211 fifth mounting hole
      322 second fitting portion
   33 protecting beam
      331 sixth mounting hole
      332 flat plate portion
      333 side plate portion
4 heat conduction pad
S fastener
W width direction
L length direction
H height direction

### DETAILED DESCRIPTION

Hereinafter a battery pack and electric automobile of the present invention will be described in detail in combination with the figures.

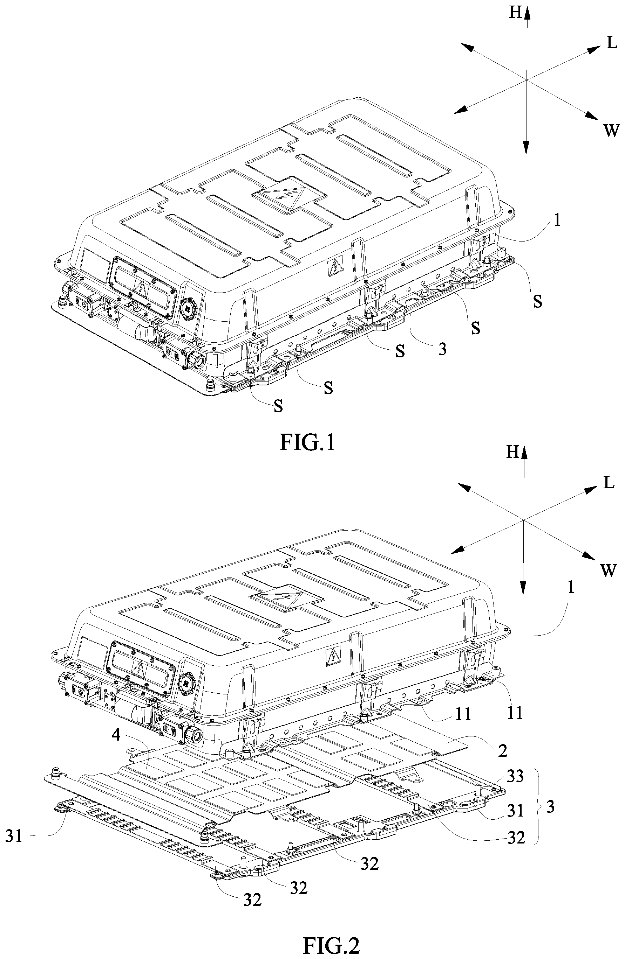

Referring to FIG. 1 and FIG. 2, an electric automobile according to the present invention comprises a mounting plate (not shown) and a battery pack. The mounting plate is used to mount the battery pack and directly contact the battery pack.

Referring to FIG. 1 and FIG. 2, the battery pack comprises: a box 1 accommodating a battery (not shown); a heat exchanging plate 2 positioned below the box 1 in a height direction H; and a bracket assembly 3 positioned below the heat exchanging plate 2 in the height direction H and fixedly connected with the box 1, and the bracket assembly 3 is used to directly contact the mounting plate. Because the bracket assembly 3 of the battery pack interposes between the heat exchanging plate 2 and the mounting plate, the heat exchanging plate 2 does not need to be directly exchanged heat with the mounting plate, thereby lowering the effect of temperature of the mounting plate on the heat exchanging plate 2 (especially when the electric automobile is in extremely cold environment or extremely hot environment), and improving the cooling or heating efficiency of the battery inside the box 1 by the heat exchanging plate 2.

Referring to FIG. 2, the box 1, the heat exchanging plate 2 and the bracket assembly 3 are independent components, when the heat exchanging plate 2 is in failure, the heat exchanging plate 2 can be replaced at any time.

In the process of use of the battery pack, in order to adjust the operating temperature of the battery by the heat exchanging plate 2, the heat exchanging plate 2 generally comprises a heat exchanging liquid circulating therein, and it can adopt a method of heating or stopping to heat the heat exchanging liquid so as to adjust the operating temperature of the battery, or a method of providing a heating film sheet on the heat exchanging plate 2 to adjust the operating temperature of the battery.

Referring to FIG. 1 and FIG. 2, a plurality of seventh mounting holes 11 are provided on an exterior of the box 1 of the battery pack, and the bracket assembly 3 is fixedly connected with the box 1 by the plurality of seventh mounting holes 11 of the box 1 and fasteners S.

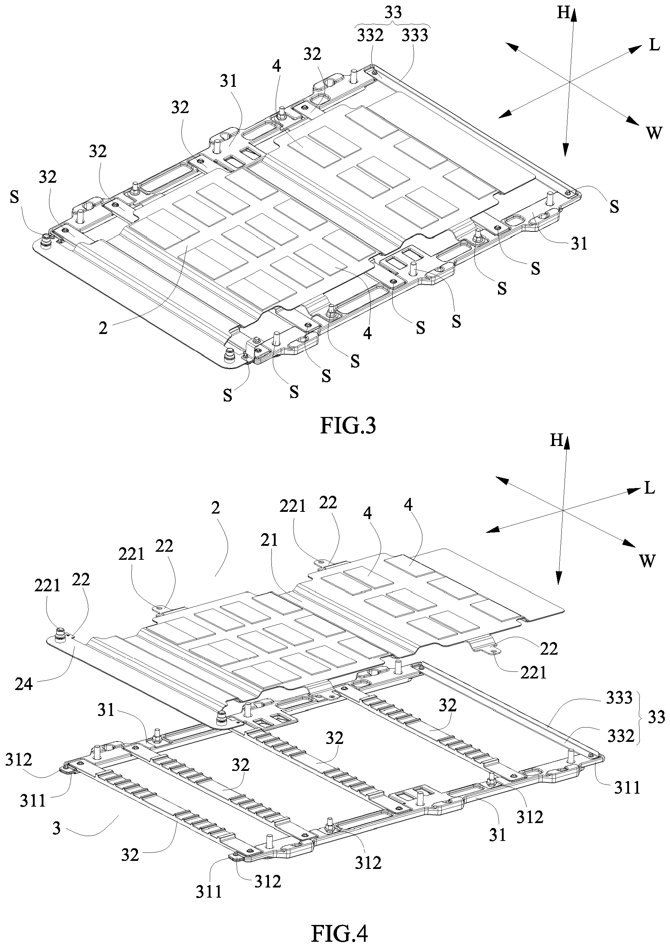

Referring to FIG. 3 and FIG. 4, the bracket assembly 3 may comprise: at least two longitudinal beams 31 spaced apart from each other in a width direction W; and at least two transversal beams 32 spaced apart from each other in a length direction L, and two transversal beam end portions 321 of the transversal beam 32 in the width direction W each are fixedly connected with one corresponding longitudinal beam 31. The longitudinal beam 31 and the transversal beam 32 may be made of a metal material, such as stainless steel, aluminum or aluminum alloy and the like.

Here, the bracket assembly 3 is formed as a frame structure by interconnecting the at least two longitudinal beams 31 and the at least two transversal beams 32, and such a structure of the bracket assembly 3 forms a space for air flowing between the heat exchanging plate 2 and the mounting plate. Because the thermal conductivity of the air is low, it may further reduce the heat transfer efficiency of the mounting plate toward the heat exchanging plate 2, and decrease the effect of the temperature of the mounting plate on the temperature of the heat exchanging liquid in the heat exchanging plate 2, thereby assisting to improve the heat exchanging or heating efficiency of the heat exchanging plate 2 with respect to the battery. Moreover, such a frame structure has strong load-carrying capability and strong anti-impact capability, and improves the structural strength of the entire battery pack. When the battery pack is in the process of installation and transportation, the bracket assembly 3 can directly bear impact or collision with respect to the heat exchanging plate 2 from an external object (including the mounting plate), thereby avoiding the damage of the heat exchanging plate 2 by the external force, and thus the bracket assembly 3 provides a good protection for the heat exchanging plate 2. In addition, the frame structure also assists to save material and greatly reduce cost.

Referring to FIG. 2 to FIG. 4, the longitudinal beam 31 may be provided as two in number. However, it is not limited thereto, and in order to further enhance the entire strength of the bracket assembly 3, the number of the longitudinal beams 31 may be appropriately increased.

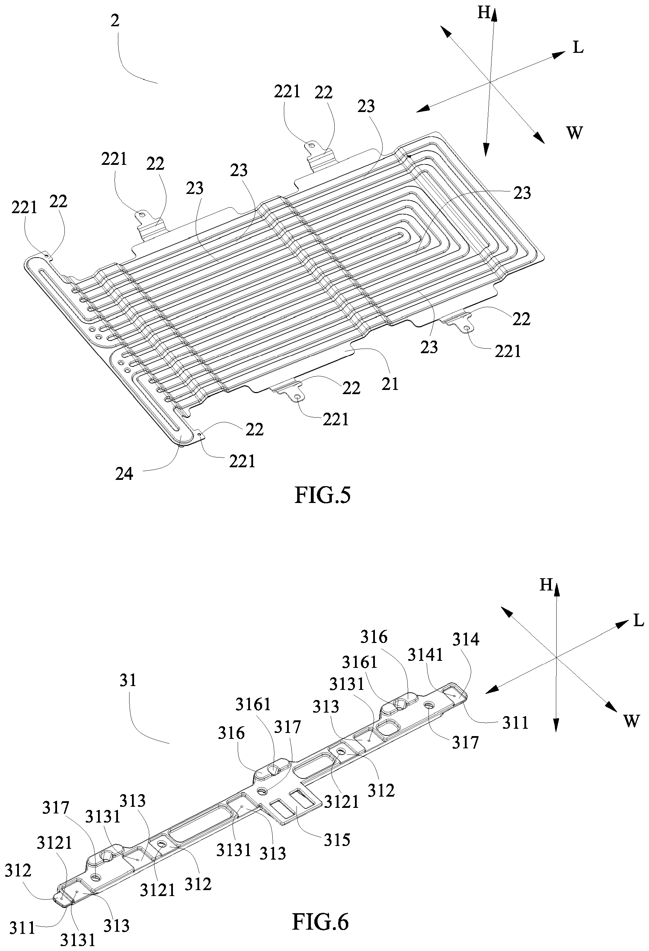

The bracket assembly 3 supports and fixedly installs the heat exchanging plate 2 from below the heat exchanging plate 2. Referring to FIG. 4 and FIG. 5, the heat exchanging plate 2 may comprise: a main body portion 21; and a plurality of first mounting portions 22, each first mounting portion 22 is formed to protrude from the main body portion 21. Referring to FIG. 3, FIG. 4 and FIG. 6, the longitudinal beam 31 may comprise a plurality of second mounting portions 312 formed on one side of the longitudinal beam 31 facing the heat exchanging plate 2, each second mounting portion 312 is cooperated with and fixedly connected with one corresponding first mounting portion 22 of the heat exchanging plate 2. When assembling the heat exchanging plate 2 and the bracket assembly 3, due to the cooperation relationship between the second mounting portion 312 and the corresponding first mounting portion 22, it facilitates quick positioning of the heat exchanging plate 2, thereby achieving a quick assembling between the heat exchanging plate 2 and the bracket assembly 3.

In order to control the overall dimension of the heat exchanging plate 2 and the bracket assembly 3 in the height direction H, the second mounting portion 312 of the longitudinal beam 31 may be cooperated with the corresponding first mounting portion 22 by concave-convex fit. Specifically, the second mounting portion 312 may be a protrusion, correspondingly, the corresponding first mounting portion 22 is a recessed groove. Alternatively, the second mounting portion 312 may be a recessed groove (as shown in FIG. 4 and FIG. 6), correspondingly, the corresponding first mounting portion 22 is a protrusion (as shown in FIG. 4 and FIG. 5).

Referring to FIG. 4 and FIG. 5, the first mounting portions 22 may be formed on two sides of the main body portion 21 in the width direction W, and the first mounting portions 22 protrude from the first mounting portion 22 in the width direction W, and the first mounting portions 22 positioned on the same side of the main body portion 21 in the width direction are spaced apart from each other.

Referring to FIG. 4 and FIG. 5, the heat exchanging plate 2 may further comprise: a extending portion 24 formed on one side of the main body portion 21 in the length direction L and protruding from the main body portion 21 in the width direction W. The first mounting portions 22 may be respectively formed on two ends of the extending portion 24 in the width direction W, and the first mounting portions 22 protrude from the extending portion 24 in the length direction L, and the second mounting portion 312 cooperated with the first mounting portion 22 on the extending portion 24 is formed on the longitudinal beam end portion 311 of the longitudinal beam 31.

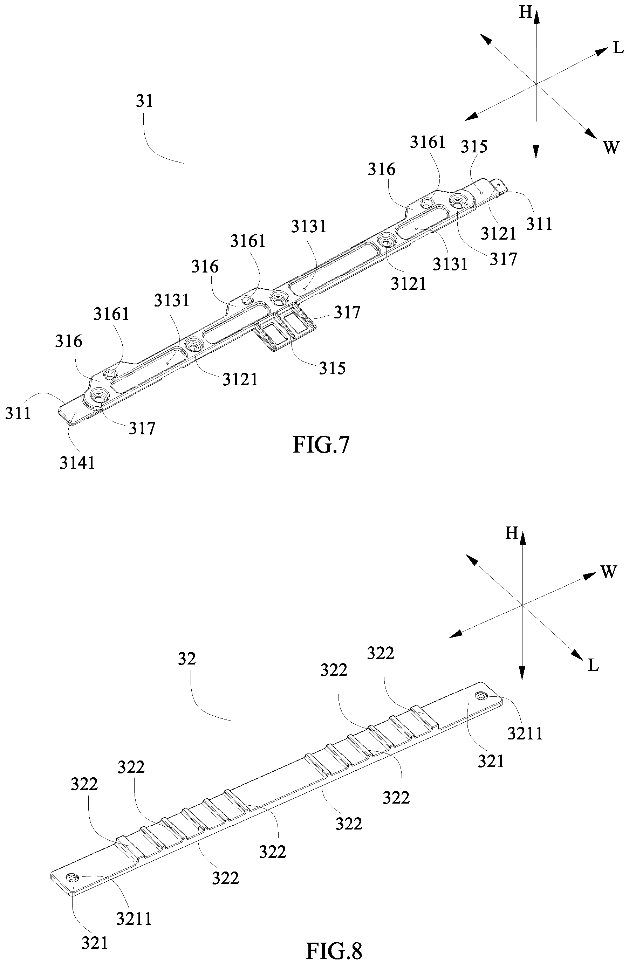

Referring to FIG. 3, the plurality of the first mounting portions 22 of the heat exchanging plate 2 may be fixedly connected with the corresponding second mounting portions 312 of the longitudinal beams 31 of the bracket assembly 3 by the fasteners S. Specifically, referring to FIG. 4 and FIG. 5, the first mounting portion 22 of the heat exchanging plate 2 may be provided with a first mounting hole 221. Referring to FIG. 6 and FIG. 7, the second mounting portion 312 of the longitudinal beam 31 may be provided with a second mounting hole 3121. When assembling the heat exchanging plate 2 and the longitudinal beam 31, the first mounting hole 221 of the heat exchanging plate 2 and the corresponding second mounting hole 3121 of the longitudinal beam 31 are aligned with each other in the height direction H and allow the corresponding fastener S to pass through and fixedly connect the heat exchanging plate 2 with the longitudinal beam 31.

In order to ensure the connection reliability between the heat exchanging plate 2 and the box 1, the second mounting hole 3121 of the bracket assembly 3, the first mounting hole 221 of the heat exchanging plate 2 and the seventh mounting hole 11 of the box 1 which correspond to each other are fixedly connected together by the fastener S.

Referring to FIG. 3 to FIG. 5, because concave-convex fit is simple, the heat exchanging plate 2 may be fixedly connected with the transversal beam 32 of the bracket assembly 3 by concave-convex fit, thereby assisting to assemble the heat exchanging plate 2 and the bracket assembly 3 quickly. Specifically, referring to FIG. 5, the heat exchanging plate 2 may further comprise a plurality of first fitting portions 23 formed on one side of the heat exchanging plate 2 facing the bracket assembly 3 and spaced apart from each other in the width direction W. Referring to FIG. 4, FIG. 8 and FIG. 9, the transversal beam 32 may further comprise a plurality of second fitting portions 322 formed on one side of the transversal beam 32 facing the heat exchanging plate 2 and spaced apart from each other in the width direction W, and each second fitting portion 322 is fitted with one corresponding first fitting portion 23 by concave-convex fit. Here, based on the concave-convex fit between the second fitting portion 322 of the transversal beam 32 and the corresponding first fitting portion 23 of the heat exchanging plate 2, a relative movement between the heat exchanging plate 2 and the transversal beams 32 in the width direction W is restricted, so that the heat exchanging plate 2 is firmly fixed with the bracket assembly 3, because the bracket assembly 3 is fixed with the box 1, the connection reliability between the heat exchanging plate 2 and the box 1 is ensured.

The first fitting portion 23 of the heat exchanging plate 2 may be a protrusion, correspondingly, the second fitting portion 322 of the transversal beam 32 is a recessed groove. Alternatively, the first fitting portion 23 of the heat exchanging plate 2 may be a recessed groove (as shown in FIG. 5), correspondingly, the second fitting portion 322 of the transversal beam 32 is a protrusion (as shown in FIG. 8).

Referring to FIG. 5, the first fitting portion 23 of the heat exchanging plate 2 may be formed in a U-shaped structure, and the plurality of first fitting portions 23 gradually expand from the inside to the outside (that is, formed as a radiation-like structure).

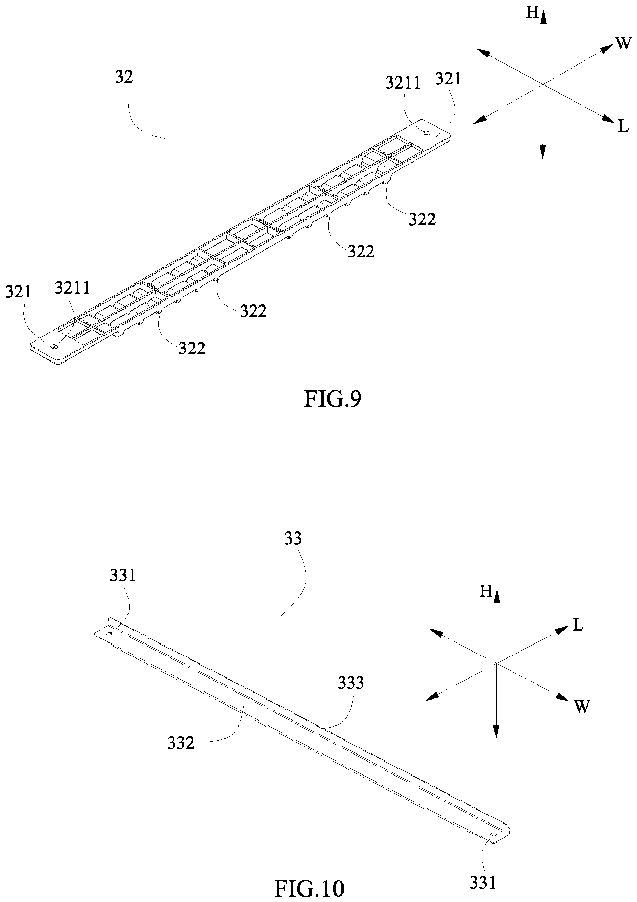

Referring to FIG. 8 and FIG. 9, the plurality of second fitting portions 322 of the transversal beam 32 may be formed as a saw-toothed structure and may be distributed symmetrically.

Referring to FIG. 3, FIG. 4 and FIG. 6, the longitudinal beam 31 may further comprise a plurality of third mounting portions 313 formed on one side of the longitudinal beam 31 facing the heat exchanging plate 2 and spaced apart from each other in the length direction L, and each third mounting portion 313 is fixedly connected with one transversal beam end portion 321 of the corresponding transversal beam 32. When assembling the at least two longitudinal beam 31 and the at least two transversal beam 32 of the bracket assembly 3, the third mounting portion 313 of the longitudinal beam 31 is used for positioning the corresponding transversal beam 32 quickly, thereby facilitating quick assembling of the longitudinal beams 31 and the plurality of transversal beams 32 into a unity. Specifically, the third mounting portion 313 of the longitudinal beam 31 may be a recessed groove, the third mounting portion 313 receives and fixedly connects with one transversal beam end portion 321 of the corresponding transversal beam 32, thereby decreasing the overall dimension of the heat exchanging plate 2 and the bracket assembly 3 in the height direction H.

Referring to FIG. 3, the transversal beam 32 may be fixedly connected with the longitudinal beam 31 by the fastener S. Specifically, referring to FIG. 6 and FIG. 7, the third mounting portion 313 of the longitudinal beam 31 may be provided with a third mounting hole 3131. Referring to FIG. 8 and FIG. 9, the transversal beam end portion 321 of the transversal beam 32 may be provided with a fifth mounting hole 3211. When assembling the at least two longitudinal beam 31 and the at least two transversal beam 32, the fifth mounting hole 3211 of the transversal beam 32 and the corresponding third mounting hole 3131 of the longitudinal beam 31 are aligned with each other in the height direction H and allow the corresponding fastener S to passed through and fixedly connect the transversal beam 32 with the longitudinal beam 31.

Referring to FIG. 3 and FIG. 4, the bracket assembly 3 may further comprise a protecting beam 33 fixedly connected with the longitudinal beam end portion 311 of the longitudinal beam 31 in the length direction L, and the protecting beam 33 is used for protecting the heat exchanging plate 2 in the length direction L. The protecting beam 33 may be made of a metal material, such as stainless steel, aluminum or aluminum alloy and the like.

The protecting beam 33 may be provided as one in number. When the battery pack is installed on the mounting plate, the end of the battery pack provided with the protecting beam 33 in the length direction L is firstly put on the mounting plate, then the entire battery pack is pushed onto the mounting plate in the length direction L, thereby avoiding the heat exchanging plate 2 being damaged during the installation of the battery pack based on the arrangement of the protecting beam 33.

In order to quickly position the protecting beam 33 to make the protecting beam 33 quickly installed on the longitudinal beam end portion 311 of the longitudinal beam 31, referring to FIG. 6 and FIG. 7, the longitudinal beam 31 may further comprise a fourth mounting portion 314 formed on one side of the longitudinal beam end portion 311 facing the heat exchanging plate 2 and fixedly connected with the protecting beam 33. Specifically, the fourth mounting portion 314 of the longitudinal beam 31 may be a recessed groove, and the fourth mounting portion 314 receives and fixedly connects with the protecting beam 33, thereby decreasing the overall dimension of the heat exchanging plate 2 and the bracket assembly 3 in the height direction H.

It is noted that, the fourth mounting portion 314 and the second mounting portion 312 which is cooperated with the first mounting portion 22 on the extending portion 24 on the same longitudinal beam 31 are respectively provided on the two longitudinal beam end portions 311 of the longitudinal beam 31 in the length direction L.

The protecting beam 33 may be fixedly connected with the longitudinal beam end portion 311 of the longitudinal beam 31 by the fastener S. Specifically, referring to FIG. 6 and FIG. 7, the fourth mounting portion 314 of the longitudinal beam 31 may be provided with a fourth mounting hole 3141. Referring to FIG. 10, the protecting beam 33 may be provided with a sixth mounting hole 331. When assembling the protecting beam 33 and the longitudinal beam 31, the sixth mounting hole 331 of the protecting beam 13 and the fourth mounting hole 3141 of the longitudinal beam 31 are aligned with each other in the height direction H and allow the corresponding fastener S to pass through and fixedly connect the protecting beam 13 with the longitudinal beam 31.

Referring to FIG. 10, the protecting beam 33 may comprise: a flat plate portion 332 arranged side by side with the at least two transversal beam 32; and a side plate portion 333 protruding from the flat plate portion 332 in the height direction H and positioned at one side of the heat exchanging plate 2 in the length direction L to protect the heat exchanging plate 2 in the length direction L. After assembling the heat exchanging plate 2 and the bracket assembly 3, referring to FIG. 3 and FIG. 4, the flat plate portion 332 of the protecting beam 33 and the transversal beam 32 together support the heat exchanging plate 2 from below, which enhances the entire structural strength of the bracket assembly 3, and the side plate portion 333 of the protecting beam 33 is positioned at one side of the heat exchanging plate 2 in the length direction L, so the side plate portion 333 can protect the heat exchanging plate 2 in the length direction L.

Referring to FIG. 6 and FIG. 7, the longitudinal beam 31 may further comprise a supporting portion 315 formed on one side of the longitudinal beam 31 in the width direction W and extending in the width direction W. The supporting portion 315 of the longitudinal beam 31 may be bonded with the box 1 by a structure adhesive, thereby improving the connection reliability between the heat exchanging plate 2 and the box 1, and assisting to improve the entire structural strength of the battery pack.

Referring to FIG. 6 and FIG. 7, the longitudinal beam 31 may further comprise an installing portion 316 formed on the other side of the longitudinal beam 31 in the width direction W and extending in the width direction W. The installing portion 316 of the longitudinal beam 31 may be used to achieve the fixed connection between the battery pack and the electric automobile.

Referring to FIG. 6 and FIG. 7 again, the installing portion 316 of the longitudinal beam 31 may be provided with a connecting hole 3161. The connecting hole 3161 is used to allow the fastener S to pass through to lock the battery pack and the electric automobile.

Referring to FIG. 6 and FIG. 7, the longitudinal beam 31 may be provided with a plurality of fixing holes 317 spaced apart from each other in the length direction L, and the fixing hole 317 penetrates the longitudinal beam 31 in the height direction H. The fixing hole 317 of the longitudinal beam 31 may be used to achieve the fixed connection between bracket assembly 3 and the box 1 of the battery pack by the fastener S.

In order to quickly transfer heat from the box 1 of the battery pack to the heat exchanging plate 2, referring to FIG. 2 to FIG. 4, the battery pack further comprises a heat conduction pad 4 provided between the box 1 and the heat exchanging plate 2. The number of the heat conduction pads 4 can be set reasonably according to the demands of the battery pack.

In order to ensure the flatness of the bottom of the bracket assembly 3 for facilitating the reliable installation between the battery pack and the electric automobile, an end of the second mounting hole 3121 away from the heat exchanging plate 2 may be formed in countersunk head groove structure for receiving the corresponding fastener S, and an end of the fixing hole 317 away from the heat exchanging plate 2 may be formed in countersunk head groove structure for receiving the corresponding fastener S, as shown in FIG. 7.

Finally, it is noted that, the fixing hole 317 of the longitudinal beam 31 of the bracket assembly 3 and the corresponding seventh mounting hole 11 of the box 1 are fixedly connected together by the corresponding fastener S to achieve the first reliable connection between the bracket assembly 3 and the box 1 of the battery pack; the first mounting hole 221 of the heat exchanging plate 2, the corresponding second mounting hole 3121 of the longitudinal beam 31, and the corresponding seventh mounting hole 11 of the box 1 are fixedly connected together by the corresponding fastener S to achieve the second reliable connection between the bracket assembly 3 and the box1; the supporting portion 315 of the longitudinal beam 31 is bonded with the box 1 by the structure adhesive to achieve the third reliable connection between the bracket assembly 3 and the box 1, thereby ensuring the connection reliability between the bracket assembly 3 and the box 1. And because the bracket assembly 3 supports and fixes the heat exchanging plate 2, which ensures the connection reliability between the heat exchanging plate 2 and the box 1.

The fasteners S described above may be a bolt, but it is not limited thereto.

## Claims

1. A battery pack, used for an electric automobile, comprising:
a box (1);
a heat exchanging plate (2) positioned below the box (1) in a height direction (H);
wherein
the battery pack further comprises: a bracket assembly (3) positioned below the heat exchanging plate (2) in the height direction (H) and fixedly connected with the box (1), and the bracket assembly (3) is used to directly contact a mounting plate of the electric automobile;
**characterized in that**
the bracket assembly (3) comprises:
at least two longitudinal beams (31) spaced apart from each other in a width direction (W); and
at least two transversal beams (32) spaced apart from each other in a length direction (L), and two transversal beam end portions (321) of the transversal beam (32) in the width direction (W) each are fixedly connected with one corresponding longitudinal beam (31).

2. The battery pack according to Claim 1, wherein
the heat exchanging plate (2) comprises: a main body portion (21); and a plurality of first mounting portions (22), each first mounting portion (22) is formed to protrude from the main body portion (21);
the longitudinal beam (31) comprises: a plurality of second mounting portions (312) formed on one side of the longitudinal beam (31) facing the heat exchanging plate (2), each second mounting portion (312) is cooperated with and fixedly connected with one corresponding first mounting portion (22) of the heat exchanging plate (2).

3. The battery pack according to Claim 1, wherein
the heat exchanging plate (2) further comprises: a plurality of first fitting portions (23) formed on one side of the heat exchanging plate (2) facing the bracket assembly (3) and spaced apart from each other in the width direction (W);
the transversal beam (32) further comprises: a plurality of second fitting portions (322) formed on one side of the transversal beam (32) facing the heat exchanging plate (2) and spaced apart from each other in the width direction (W), and each second fitting portion (322) is fitted with one corresponding first fitting portion (23) by concave-convex fit.

4. The battery pack according to Claim 3, wherein
the first fitting portion (23) of the heat exchanging plate (2) is formed in a U-shaped structure;
the plurality of second fitting portions (322) of the transversal beam (32) are formed as a saw-toothed structure.

5. The battery pack according to Claim 1, wherein the longitudinal beam (31) further comprises: a plurality of third mounting portions (313) formed on one side of the longitudinal beam (31) facing the heat exchanging plate (2) and spaced apart from each other in the length direction (L), and each third mounting portion (313) is fixedly connected with one transversal beam end portion (321) of the corresponding transversal beam (32).

6. The battery pack according to Claim 1, wherein the bracket assembly (3) further comprises: a protecting beam (33) fixedly connected with the longitudinal beam end portion (311) of the longitudinal beam (31) in the length direction (L), and the protecting beam (33) is used for protecting the heat exchanging plate (2) in the length direction (L).

7. The battery pack according to Claim 6, wherein the longitudinal beam (31) further comprises: a fourth mounting portion (314) formed on one side of the longitudinal beam end portion (311) facing the heat exchanging plate (2) and fixedly connected with the protecting beam (33).

8. The battery pack according to Claim 6, wherein the protecting beam (33) comprises:
a flat plate portion (332) arranged side by side with the at least two transversal beam (32); and
a side plate portion (333) protruding from the flat plate portion (332) in the height direction (H) and positioned at one side of the heat exchanging plate (2) in the length direction (L) to protect the heat exchanging plate (2) in the length direction (L).

9. The battery pack according to Claim 1, wherein the longitudinal beam (31) further comprises:
a supporting portion (315) formed on one side of the longitudinal beam (31) in the width direction (W) and extending in the width direction (W); and
an installing portion (316) formed on the other side of the longitudinal beam (31) in the width direction (W) and extending in the width direction (W).

10. An electric automobile, wherein the electric automobile comprises the battery pack according to any one of Claims 1 to 9.

## Patentansprüche

1. Batteriepaket zur Verwendung in einem Elektrofahrzeug, umfassend:
einen Kasten (1);
eine Wärmetauscherplatte (2), die in einer Höhenrichtung (H) unterhalb des Kastens (1) angeordnet ist;
wobei
das Batteriepaket ferner umfasst: eine Halterungsbaugruppe (3), die in Höhenrichtung (H) unter der Wärmetauscherplatte (2) positioniert und fest mit dem Kasten (1) verbunden ist, und die Halterungsbaugruppe (3) zum direkten Kontakt mit einer Montageplatte des Elektrofahrzeugs verwendet ist;
**dadurch gekennzeichnet, dass**
die Halterungsbaugruppe (3) umfasst:
mindestens zwei Längsträger (31), die in einer Breitenrichtung (W) voneinander beabstandet sind; und
mindestens zwei Querträger (32), die in einer Längsrichtung (L) voneinander beabstandet sind, wobei zwei Querträgerendabschnitte (321) des Querträgers (32) in der Breitenrichtung (W) jeweils fest mit einem entsprechenden Längsträger (31) verbunden sind.

2. Batteriepaket nach Anspruch 1, wobei
die Wärmetauscherplatte (2) umfasst: einen Hauptkörperabschnitt (21); und eine Vielzahl von ersten Befestigungsabschnitten (22), wobei jeder erste Befestigungsabschnitt (22) so ausgebildet ist, dass er aus dem Hauptkörperabschnitt (21) herausragt;
wobei der Längsträger (31) umfasst: eine Vielzahl von zweiten Befestigungsabschnitten (312), die auf einer Seite des Längsträgers (31), die der Wärmetauscherplatte (2) zugewandt ist, ausgebildet sind, wobei jeder zweite Befestigungsabschnitt (312) mit einem entsprechenden ersten Befestigungsabschnitt (22) der Wärmetauscherplatte (2) zusammenwirkt und fest mit diesem verbunden ist.

3. Batteriepaket nach Anspruch 1, wobei
die Wärmetauscherplatte (2) ferner umfasst: eine Vielzahl von ersten Passabschnitten (23), die auf einer Seite der Wärmetauscherplatte (2), die der Halterungsbaugruppe (3) zugewandt ist, ausgebildet sind und in der Breitenrichtung (W) voneinander beabstandet sind;
wobei der Querträger (32) ferner umfasst: eine Vielzahl von zweiten Passabschnitten (322), die auf einer Seite des Querträgers (32) ausgebildet sind, die der Wärmetauscherplatte (2) zugewandt ist, und die in der Breitenrichtung (W) voneinander beabstandet sind, und jeder zweite Passabschnitt (322) mit einem entsprechenden ersten Passabschnitt (23) durch konkavkonvexe Passung zusammengefügt ist.

4. Batteriepaket nach Anspruch 3, wobei
der erste Passabschnitt (23) der Wärmetauscherplatte (2) in einer U-förmigen Struktur ausgebildet ist;
die Vielzahl der zweiten Passabschnitte (322) des Querträgers (32) als sägezahnförmige Struktur ausgebildet ist.

5. Batteriepaket nach Anspruch 1, wobei der Längsträger (31) ferner umfasst: eine Vielzahl von dritten Montageabschnitten (313), die auf einer Seite des Längsträgers (31), die der Wärmetauscherplatte (2) zugewandt ist, ausgebildet sind und in der Längsrichtung (L) voneinander beabstandet sind, und jeder dritte Montageabschnitt (313) fest mit einem Querträgerendabschnitt (321) des entsprechenden Querträgers (32) verbunden ist.

6. Batteriepaket nach Anspruch 1, wobei die Halterungsbaugruppe (3) ferner umfasst: einen Schutzträger (33), der mit dem Längsträgerendabschnitt (311) des Längsträgers (31) in der Längsrichtung (L) fest verbunden ist, wobei der Schutzträger (33) zum Schutz der Wärmetauscherplatte (2) in der Längsrichtung (L) verwendet ist.

7. Batteriepaket nach Anspruch 6, wobei der Längsträger (31) ferner umfasst: einen vierten Befestigungsabschnitt (314), der auf einer Seite des Längsträgerendabschnitts (311) ausgebildet ist, die der Wärmetauscherplatte (2) zugewandt ist, und fest mit dem Schutzträger (33) verbunden ist.

8. Batteriepaket nach Anspruch 6, wobei der Schutzträger (33) umfasst:
einen flachen Plattenabschnitt (332), der Seite an Seite mit den mindestens zwei Querträgern (32) angeordnet ist; und
einen Seitenplattenabschnitt (333), der von dem flachen Plattenabschnitt (332) in der Höhenrichtung (H) vorsteht und an einer Seite der Wärmetauscherplatte (2) in der Längsrichtung (L) angeordnet ist, um die Wärmetauscherplatte (2) in der Längsrichtung (L) zu schützen.

9. Batteriepaket nach Anspruch 1, wobei der Längsträger (31) ferner umfasst:
einen Stützabschnitt (315), der auf einer Seite des Längsträgers (31) in der Breitenrichtung (W) ausgebildet ist und sich in der Breitenrichtung (W) erstreckt; und
einen Montageabschnitt (316), der auf der anderen Seite des Längsträgers (31) in der Breitenrichtung (W) ausgebildet ist und sich in der Breitenrichtung (W) erstreckt.

10. Elektrofahrzeug, wobei das Elektrofahrzeug das Batteriepaket nach einem der Ansprüche 1 bis 9 umfasst.

## Revendications

1. Bloc-batterie, utilisé pour une automobile électrique, comprenant :
un boîtier (1) ;
une plaque d'échange de chaleur (2) positionnée sous le boîtier (1) dans une direction de hauteur (H) ;
dans lequel
le bloc-batterie comprend en outre : un ensemble de support (3) positionné sous la plaque d'échange de chaleur (2) dans la direction de hauteur (H) et relié de manière fixe au boîtier (1), et l'ensemble de support (3) est utilisé pour entrer directement en contact avec une plaque de montage de l'automobile électrique ;
**caractérisé en ce que**
l'ensemble de support (3) comprend :
au moins deux poutres longitudinales (31) espacées l'une de l'autre dans une direction de largeur (W) ; et
au moins deux poutres transversales (32) espacées l'une de l'autre dans une direction de longueur (L), et deux parties d'extrémité de poutre transversale (321) de la poutre transversale (32) dans la direction de largeur (W) sont chacune reliées de manière fixe à une poutre longitudinale correspondante (31).

2. Bloc-batterie selon la revendication 1, dans lequel
la plaque d'échange de chaleur (2) comprend : une partie corps principal (21) ; et une pluralité de premières parties de montage (22), chaque première partie de montage (22) étant formée pour faire saillie de la partie corps principal (21) ;
la poutre longitudinale (31) comprend: une pluralité de deuxièmes parties de montage (312) formées sur un côté de la poutre longitudinale (31) faisant face à la plaque d'échange de chaleur (2), chaque deuxième partie de montage (312) coopérant avec une première partie de montage correspondante (22) de la plaque d'échange de chaleur (2) et y étant reliée de manière fixe.

3. Bloc-batterie selon la revendication 1, dans lequel
la plaque d'échange de chaleur (2) comprend en outre : une pluralité de premières parties d'ajustement (23) formées sur un côté de la plaque d'échange de chaleur (2) faisant face à l'ensemble de support (3) et espacées les unes des autres dans la direction de largeur (W) ;
la poutre transversale (32) comprend en outre : une pluralité de deuxièmes parties d'ajustement (322) formées sur un côté de la poutre transversale (32) faisant face à la plaque d'échange de chaleur (2) et espacées les unes des autres dans la direction de largeur (W), et chaque deuxième partie d'ajustement (322) est ajustée avec une première partie d'ajustement correspondante (23) par un ajustement concave-convexe.

4. Bloc-batterie selon la revendication 3, dans lequel
la première partie d'ajustement (23) de la plaque d'échange de chaleur (2) est formée en une structure en forme de U ;
la pluralité de deuxièmes parties d'ajustement (322) de la poutre transversale (32) sont formées comme une structure en dents de scie.

5. Bloc-batterie selon la revendication 1, dans lequel la poutre longitudinale (31) comprend en outre: une pluralité de troisièmes parties de montage (313) formées sur un côté de la poutre longitudinale (31) faisant face à la plaque d'échange de chaleur (2) et espacées les unes des autres dans la direction de longueur (L), et chaque troisième partie de montage (313) est reliée de manière fixe à une partie d'extrémité de poutre transversale (321) de la poutre transversale correspondante (32).

6. Bloc-batterie selon la revendication 1, dans lequel l'ensemble de support (3) comprend en outre : une poutre de protection (33) reliée de manière fixe à la partie d'extrémité de poutre longitudinale (311) de la poutre longitudinale (31) dans la direction de longueur (L), et la poutre de protection (33) est utilisée pour protéger la plaque d'échange de chaleur (2) dans la direction de longueur (L).

7. Bloc-batterie selon la revendication 6, dans lequel la poutre longitudinale (31) comprend en outre : une quatrième partie de montage (314) formée sur un côté de la partie d'extrémité de poutre longitudinale (311) faisant face à la plaque d'échange de chaleur (2) et reliée de manière fixe à la poutre de protection (33).

8. Bloc-batterie selon la revendication 6, dans lequel la poutre de protection (33) comprend :
une partie plaque plate (332) agencée côte à côte avec lesdites au moins deux poutres transversales (32) ; et
une partie plaque latérale (333) faisant saillie de la partie plaque plate (332) dans la direction de hauteur (H) et positionnée sur un côté de la plaque d'échange de chaleur (2) dans la direction de longueur (L) pour protéger la plaque d'échange de chaleur (2) dans la direction de longueur (L).

9. Bloc-batterie selon la revendication 1, dans lequel la poutre longitudinale (31) comprend en outre :
une partie de soutien (315) formée sur un côté de la poutre longitudinale (31) dans la direction de largeur (W) et s'étendant dans la direction de largeur (W) ; et
une partie d'installation (316) formée sur l'autre côté de la poutre longitudinale (31) dans la direction de largeur (W) et s'étendant dans la direction de largeur (W).

10. Automobile électrique, dans laquelle l'automobile électrique comprend le bloc-batterie selon l'une quelconque des revendications 1 à 9.
